# EUROPÄISCHE PATENTSCHRIFT

(11) **EP 3 353 612 B1**
(45) Veröffentlichungstag und Bekanntmachung des Hinweises auf die Patenterteilung: **28.12.2022**
(21) Anmeldenummer: 16766969.6
(22) Anmeldetag: 19.09.2016
(51) Int. Cl.: G05B 19/19, G05B 19/416

(54) **VERFAHREN ZUR STEUERUNG EINES ELEKTRISCHEN ANTRIEBS SOWIE ELEKTRISCHER ANTRIEB**
METHOD FOR CONTROLLING AN ELECTRICAL DRIVE, AND ELECTRICAL DRIVE
PROCÉDÉ DE COMMANDE D'UN ENTRAÎNEMENT ÉLECTRIQUE AINSI QU'ENTRAÎNEMENT ÉLECTRIQUE

(30) Priorität: 22.09.2015 DE 102015218203
(43) Veröffentlichungstag der Anmeldung: 01.08.2018
(73) Patentinhaber: SCHUNK Electronic Solutions GmbH, 78112 St. Georgen (DE)
(72) Erfinder: FELLHAUER, Bruno, 74336 Brackenheim (DE); HÖPFL, Sebastian, 74211 Leingarten (DE); KHOURY, Jakob, 74321 Bietigheim-Bissingen (DE); DIETERLE, Franz, 77761 Schiltach (DE); HEILMANN, Matthias, 78126 Königsfeld (DE); RUGGIERI, Patrick, 78647 Trossingen (DE)
(74) Vertreter: DREISS Patentanwälte PartG mbB
(86) Internationale Anmeldenummer: PCT/EP2016/072136
(87) Internationale Veröffentlichungsnummer: WO 2017/050683

(56) Entgegenhaltungen:
- EP-A1- 0 548 505
- EP-A1- 0 804 672
- EP-A2- 0 793 157
- EP-B1- 0 804 672
- US-A- 4 999 551

## Beschreibung

Die Erfindung betrifft ein Verfahren zur Steuerung eines elektrischen Antriebs, insbesondere eines Linear- oder Schwenkantriebs, mit einem in einem Hinlauf zwischen einem Startpunkt und einem Endpunkt und in einem Rücklauf zwischen dem Endpunkt und dem Startpunkt verfahrbaren Stellelement. Die Erfindung betrifft auch einen derartigen elektrischen Antrieb.

Bei elektrischen Antrieben, die als Linearantrieb ausgebildet sind, kann das Stellelement beispielsweise als Stellbacke oder Stellschiene ausgebildet sein, die entlang einer geraden Richtung zwischen dem Startpunkt und dem Endpunkt bewegt wird. Für den Fall, dass der elektrische Antrieb als Schwenkantrieb ausgebildet ist, kann das Stellelement als Schwenkteller oder Schwenkplatte vorgesehen sein. Das Stellelement bewegt sich dann um eine Drehachse vom Startpunkt zum Endpunkt.

Elektrische Antriebe und Verfahren zu deren Steuerung sind aus dem Stand der Technik in vielfältiger Art und Weise vorbekannt. Beispielsweise offenbart die DE 103 33 067 B4 einen elektrischen Antrieb, der eine Lernvorrichtung zum Einlernen einer Strecke aufweist, wobei die Lernvorrichtung über das Betätigen eines Lernbedienelements angesteuert wird.

Aus der DE 10 2005 010 089 A1 ist ein Verfahren bekannt, in dem eine Geschwindigkeit dynamisch angepasst wird, um ein Stellelement in eine Endposition zu bringen.

Aus der EP 0 804 672 A1 ist ein Verfahren zur Steuerung eines Antriebs eines Torblattes mit Merkmalen des Oberbegriffs des Patentanspruchs 1 bekannt.

Der vorliegenden Erfindung liegt die Aufgabe zugrunde, ein Verfahren zur Steuerung eines elektrischen Antriebs sowie einen elektrischen Antrieb bereitzustellen, bei dem das Stellelement zwischen dem Startpunkt und dem Endpunkt "selbstlernend" mit hoher bzw. maximaler Geschwindigkeit verfahren werden kann.

Diese Aufgabe wird mit einem Verfahren gemäß dem Patentanspruch 1 gelöst. Das erfindungsgemäße Verfahren sieht folglich vor, dass das Stellelement im Hinlauf und/oder Rücklauf über eine erste Wegstrecke x_{beschl} auf eine erste Geschwindigkeit vₘₐₓ beschleunigt wird, über eine zweite Wegstrecke x_{brems} abgebremst wird und danach über eine dritte Wegstrecke x_{safe1} mit einer geringen zweiten Geschwindigkeit v_{safe} gegen einen Anschlag bewegt wird.

Das Stellelement wird dann in einem oder mehreren nachfolgenden Hinläufen und/oder Rückläufen über eine dritte Wegstrecke x_{safe2}, die kürzer ist als die Wegstrecke x_{safe1}, mit einer geringeren oder mit der geringeren zweiten Geschwindigkeit v_{safe} gegen den Anschlag bewegt. Die zweite Geschwindigkeit v_{safe} liegt dabei unter der ersten Geschwindigkeit vₘₐₓ.

Unter einer geringen zweiten, oder der geringen zweiten Geschwindigkeit v_{safe}, wird eine Geschwindigkeit verstanden, bei der das Stellelement gegen den Endpunkt und den Startpunkt gefahren werden kann, so dass es zu keiner Beschädigung des Stellelements, oder von an dem Startpunkt und Endpunkt vorgesehenen Anschlägen, kommt. Der Startpunkt und Endpunkt wird folglich durch das Auffahren und Anschlagen des Stellelements gegen die Anschläge definiert. Diese Positionen des Stellelements können dann gespeichert bzw. hinterlegt werden.

Gemäß dem erfindungsgemäßen Verfahren verkürzt sich folglich bei nachfolgenden Hinläufen und/oder Rückläufen jeweils die dritte Wegstrecke x_{safe}; hierdurch ergibt sich eine Verschiebung des Bremspunktes des Stellelements, also des Punktes, in dem das Stellelement abgebremst wird, um auf die zweite Geschwindigkeit v_{safe} zu gelangen. Die Beschleunigungsphase sowie die Bremsphase werden folglich länger und die dritte Wegstrecke x_{safe} kürzer. Die maximal zu erreichende erste Geschwindigkeit vₘₐₓ nimmt aufgrund der längeren Beschleunigungsphasen zu. Insgesamt wird dadurch in nachfolgenden Bewegungszyklen ein schnelleres Hinlaufen bzw. Rücklaufen des Stellelements erreicht. Mit jedem Durchlauf eines Hinlaufs und/oder Rücklaufs kann folglich die Zeitdauer, die das Stellelement vom Startpunkt zum Endpunkt bzw. vom Endpunkt zum Startpunkt benötigt, verkürzt werden. Dennoch wird gewährleistet, dass das Stellelement mit der zulässigen zweiten Geschwindigkeit v_{safe} auf den jeweiligen Anschlag trifft, so dass es zu keiner Beschädigung des Stellelements bzw. des jeweiligen Anschlags kommt.

Die Beschleunigung entlang der ersten Wegstrecke x_{beschl} der Erreichung der ersten Geschwindigkeit vₘₐₓ sowie die Abbremsung entlang der zweiten Wegstrecke x_{brems} kann dabei jeweils mit maximaler Bestromung eines das Stellelement antreibenden Motors erfolgen, so dass das Stellelement maximal beschleunigt und maximal abgebremst wird. Das Beschleunigen und Abbremsen kann dabei mit identischen oder unterschiedlichen Absolutwerten erfolgen.

Insbesondere bei Inbetriebnahme des Antriebs bzw. beim ersten Hinlauf und/oder ersten Rücklauf kann in einer Anfahrphase vorgesehen sein, dass das Stellelement lediglich auf die geringe zweite Geschwindigkeit v_{safe} beschleunigt wird. Ein Beschleunigen darüber hinaus auf eine höhere Geschwindigkeit oder auf die erste Geschwindigkeit vₘₐₓ findet folglich nicht statt. Dies hat den Vorteil, dass beim ersten Hinlauf und/oder Rücklauf zunächst der Startpunkt und der Endpunkt "gesucht" werden können. Dazu trifft das Stellelement auf den jeweiligen Anschlag des Startpunkts und Endpunkts auf. Diese Positionen, also der Startpunkt und der Endpunkt, können dann hinterlegt werden, insbesondere in einem Speicher abgespeichert werden.

In dieser Anfahrphase erstreckt sich folglich die dritte Wegstrecke x_{safe} über die im Wesentlichen gesamte Länge zwischen Startpunkt und Endpunkt.

An diese Anlernphase schließt sich eine Einlernphase über mehrere Hin- und Rückläufe hinweg an, bei denen die dritten Wegstrecken x_{safe1, 2...n} bei jedem Lauf jeweils kürzer werden, bis letztlich eine dritte Wegstrecke x_{safe} erreicht wird, die einer minimalen dritten Länge x_{safe-min} entspricht.

Gleichzeitig werden die maximalen ersten Geschwindigkeiten v_{max1, 2, ...n} in jedem Hin- und Rückläuf höher, bis die maximale erste Geschwindigkeit vₘₐₓ erreicht ist. Der Bremspunkt zwischen Beschleunigen und Abbremsen wird folglich beim Hinlauf weg vom Startpunkt hin zum Endpunkt und beim Rücklauf weg vom Endpunkt hin zum Startpunkt verlagert. In der Anlern- und Einlernphase hat der Benutzer dabei schon die volle Funktionalität, jedoch bei längerer Zykluszeit.

Ist die minimale dritte Wegstrecke x_{safe-min} erreicht, so befindet sich der Antrieb in der Betriebsphase, in der die Beschleunigungsphase maximal lang und die erste Geschwindigkeit vₘₐₓ maximal hoch ist. Beim weiteren Hin- und Herverfahren findet keine weitere Verkürzung von der minimalen dritten Wegstrecke x_{safe-min} statt.

Die Einlernphase kann sich insbesondere nahtlos an die oben beschriebene Anfahrphase anschließen, und zwar ohne dass hierfür vom Bediener des Antriebs irgendwelche Maßnahmen zu ergreifen sind. Der Antrieb erreicht ferner ohne Zutun von außen vergleichsweise schnell die sich an die Einlernphase anschließende Betriebsphase, bei der das Stellelement maximal schnell vom Startpunkt zum Endpunkt bzw. vom Endpunkt zum Startpunkt bewegt wird. Durch Vorsehen der minimalen, noch zulässigen Länge der dritten Wegstrecke x_{safe} kann dennoch gewährleistet werden, dass das Stellelement mit einer noch zulässigen Geschwindigkeit auf den jeweiligen Anschlag auftrifft.

Vorteilhafterweise kann die maximale erste Geschwindigkeit vₘₐₓ vorgegeben werden. Der Bediener kann folglich über die Vorgabe der maximalen Geschwindigkeit ersten vₘₐₓ bestimmen, ob die dritte Wegstrecke x_{safe} in der Betriebsphase vergleichsweise lang oder vergleichsweise kurz ausfallen soll.

Ferner ist vorteilhaft, wenn die auf das Stellelement wirkenden äußeren Störeinflüsse in Form von auf das Stellelement wirkenden Kräften detektiert werden. Die Störeinflüsse können dabei insbesondere abhängen von am Stellelement angeordneten Bauteilen oder von mit dem Stellelement zu verfahrenden Bauteilen. Die Störeinflüsse können auch durch eine Baulage vorgegeben werden, beispielsweise durch ein horizontales oder vertikales Verfahren des Stellelements. Auch äußere Kräfte und auftretende Reibung, die je nach Betriebsdauer unterschiedlich hoch sein kann, beeinflussen das Verfahren und sind Störeinflüsse. Vorteilhafterweise werden während der Betriebsphase die Störeinflüsse kontinuierlich detektiert und die Antriebsparameter kontinuierlich an die Störeinflüsse angepasst. Der Antrieb treibt folglich das Stellelement derart an, dass die Störeinflüsse berücksichtigt werden.

Sollte allerdings eine vorgebbare Störempfindlichkeit überschritten werden, ist vorteilhaft, wenn der Antrieb dann in einen Störmodus schaltet. Die Störempfindlichkeit ist dabei reziprok zu einer Robustheit des Antriebs. Eine hohe Störempfindlichkeit entspricht einer geringen Robustheit; eine geringe Störempfindlichkeit einer hohen Robustheit.

Der Störmodus kann dabei so aussehen, dass das Stellelement lediglich über die gesamte Wegstrecke vom Startpunkt bis zum Endpunkt mit der Geschwindigkeit v_{safe} bewegt wird. Der Störmodus kann auch derart gestaltet sein, dass eine Abschaltung oder ein Notaus des Antriebs erfolgt.

Das Detektieren der Störeinflüsse kann insbesondere mittels einer Beschleunigungsüberwachung erfolgen. Dies kann derart erreicht werden, dass beispielsweise die Beschleunigung eines vorherigen Hinlaufs mit der Beschleunigung eines nachfolgenden Hinlaufs verglichen wird, und dass bei zu großer Abweichung der beiden Beschleunigungen die vorgebbare Störempfindlichkeit überschritten ist. Bei geringen Abweichungen können die Antriebsparameter entsprechend angepasst werden, so dass bei einem nächsten Hinlauf wieder eine angepasste Beschleunigung gefahren werden kann. Entsprechendes gilt natürlich für die Rückläufe. Bei hohen Abweichungen kann in den Störmodus geschaltet werden.

Vorteilhafterweise ist nicht nur die minimale dritte Wegstrecke x_{safe-min} und/oder die maximale erste Geschwindigkeit vₘₐₓ einstellbar, sondern auch die Störempfindlichkeit des Antriebs. Dadurch kann vorgegeben werden, ob ein vergleichsweise frühes oder spätes Umschalten in den Störmodus erfolgt oder nicht.

Besonders vorteilhaft hat sich herausgestellt, wenn bei Verlängerung der dritten Wegstrecke x_{safe} und/oder Erhöhung der maximalen ersten Geschwindigkeit vₘₐₓ zeitgleich die Störempfindlichkeit verringert wird und/oder wenn bei Verkürzung der dritten Wegstrecke x_{safe} und/oder Verringerung der maximalen ersten Geschwindigkeit vₘₐₓ die Störempfindlichkeit erhöht wird. Vorteilhafterweise kann dies über einen Verstellregler für den Hinlauf und einen weiteren Verstellregler für den Rücklauf erfolgen. Wird also die dritte Wegstrecke x_{safe} sehr kurz oder die maximale erste Geschwindigkeit vₘₐₓ sehr hoch gewählt, was ein sehr schnelles Hin- und Herlaufen des Stellelements bewirkt, können bereits geringe Störeinflüsse ausreichen, damit der Antrieb in den Störmodus schaltet. Wird andererseits der Antrieb vergleichsweise langsam gefahren, durch Verringerung der Geschwindigkeit bzw. Verlängerung der Wegstrecke x_{safe}, so können größere Störeinflüsse auftreten, ohne dass es zu einem Umschalten in den Störmodus kommt. Vorteilhafterweise wird das Stellelement im Startpunkt und/oder Endpunkt mit einer erhöhten oder maximalen Kraft gegen den Anschlag beaufschlagt. Dadurch, dass dem Antrieb die Positionen der Anschläge und vorzugsweise auch die Verfahrgeschwindigkeiten bekannt sind, kann das Stellelement derart verfahren werden, dass eine Krafterhöhung beim Anschlagen gegen den jeweiligen Anschlag bereitgestellt wird. Dies hat den Vorteil, dass Schwingungen, die beim Auftreffen des Stellelements gegen den Anschlag auftreten, verringert und insbesondere minimiert werden.

Die eingangs genannte Aufgabe wird auch durch einen elektrischen Antrieb gemäß Anspruch 9, insbesondere einen Linear- oder Schwenkantrieb gelöst, der gemäß dem erfindungsgemäßen Verfahren betrieben wird. Ein derartiger Antrieb weist ein in einem Hinlauf zwischen einem Startpunkt und einem Endpunkt und in einem Rücklauf zwischen dem Endpunkt und dem Startpunkt verfahrbares Stellelement auf. Ferner sind insbesondere verstellbare Anschlagmittel vorgesehen, gegen welche das Stellelement im Startpunkt und/oder Endpunkt anschlägt. Zudem ist ein elektrischer Motor vorgesehen, über den das Stellelement verfahren wird. Ferner ist vorteilhaft, wenn Wegmessmittel zur Bestimmung der Lage des Stellelements vorgesehen sind und wenn eine Steuerung zur Ansteuerung des Motors insbesondere in Abhängigkeit der Signale der Wegmessmittel vorgesehen sind. Die Steuerung ist dabei derart ausgebildet und eingerichtet, dass der Antrieb erfindungsgemäß betreibbar ist.

Ferner ist vorteilhaft, wenn Einstellmittel, insbesondere Einstellregler zur Einstellung der Länge der dritten Wegstrecke x_{safe} und/oder die maximale erste Geschwindigkeit vₘₐₓ vorgesehen sind.

Ferner ist vorteilhaft, wenn ein Einflussmessmittel zur Bestimmung der auf das Stellelement wirkenden äußeren Störeinflüssen vorgesehen sind, beispielsweise in Form vom am Stellelement vorgesehenen Beschleunigungssensoren.

Ferner ist vorteilhaft, wenn Einstellmittel zur Einstellung der Störempfindlichkeit des Antriebs vorgesehen sind, wobei der Antrieb im Betrieb dann in einen Störmodus schaltet, wenn die Störeinflüsse die Störempfindlichkeit überschreiten.

Zur optimalen Einstellung des Hinlaufs und Rücklaufs ist vorteilhaft, wenn jeweils ein Einstellelement für den Hinlauf und den Rücklauf vorgesehen ist, wobei mit dem jeweiligen Einstellmittel dann die jeweilige dritte Wegstrecke x_{safe} und/oder die maximale erste Geschwindigkeit vₘₐₓ verstellt werden kann. Bei Verlängerung der dritten Wegstrecke x_{safe} bzw. verringern der maximalen ersten Geschwindigkeit vₘₐₓ wird die Störempfindlichkeit verringert und bei Verkürzung der dritten Wegstrecke x_{safe} . bzw. erhöhen der maximalen erstem Geschwindigkeit vₘₐₓ wird die Störempfindlichkeit erhöht. Das Einstellmittel kann insbesondere als Drehregler ausgebildet sein. Insgesamt sind vorteilhafterweise zwei Drehregler vorgesehen, ein Drehregler für den Hinlauf und ein Drehregler für den Rücklauf.

Der Motor kann insbesondere als Linearmotor oder als Schwenkantrieb ausgebildet sein, wobei die Steuerung in den Motor integriert sein kann. Die Wegmessmittel zur Bestimmung der Lage des Stellelements können dabei vom Sekundärteil des Linearmotors gebildet sein.

Weitere Vorteile und vorteilhafte Ausgestaltungen der Erfindung können der nachfolgenden Beschreibung entnommen werden, in der die Erfindung anhand eines Ausführungsbeispiels näher beschrieben und erläutert ist.

Es zeigen:
- Figur 1: einen erfindungsgemäßen Antrieb in perspektivischer Ansicht;
- Figur 2: den Antrieb gemäß Figur 1 mit aufgeschnittenem Gehäuse;
- Figur 3 und 4: den Verfahrweg des Stellelements über dessen Geschwindigkeit in der Anfahrphase;
- Figur 5 und 6: den Verfahrweg des Anschlags über dessen Geschwindigkeit in der Einlernphase; und
- Figur 7 und 8: den Verfahrweg des Stellelements über dessen Geschwindigkeit in zwei verschiedenen Betriebsphasen.

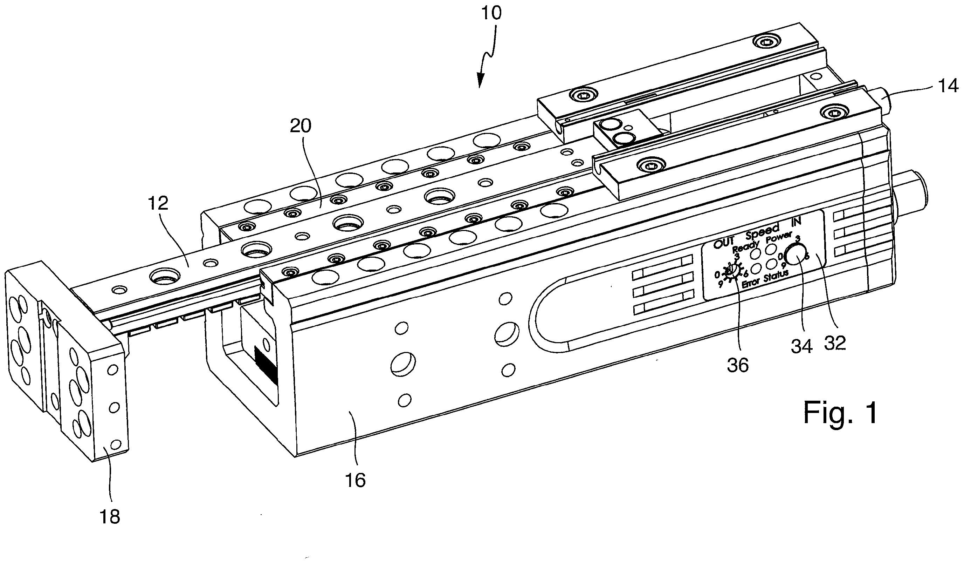

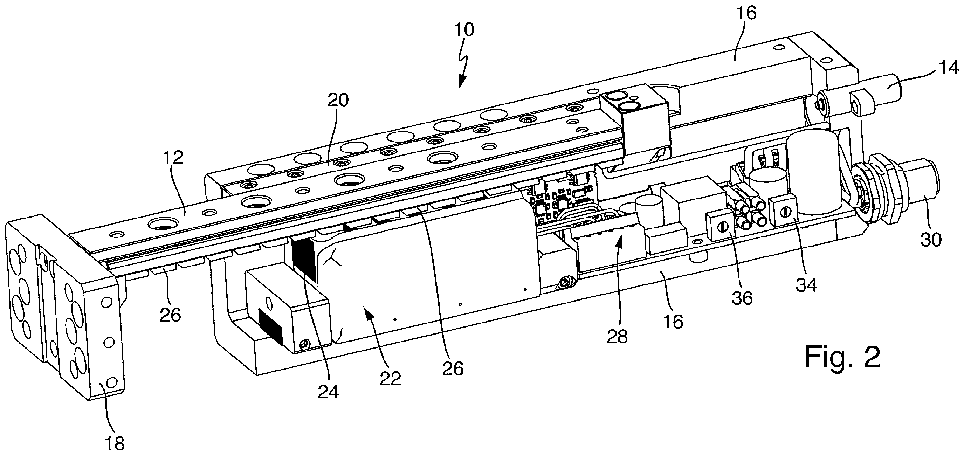

Figuren 1 und 2 zeigen einen elektrischen Antrieb 10 in Form eines Linearantriebs. Der Antrieb 10 umfasst ein Stellelement 12, das als Achsenschiene ausgebildet ist. Das Stellelement 12 ist dabei zwischen zwei Anschlägen 14 hin und her verfahrbar, wobei in Figur 1 und 2 lediglich ein Anschlag 14 zu erkennen ist. Der Anschlag 14 ist dabei in Verfahrrichtung des Stellelements 12 in einem Gehäuse 16 verstellbar angeordnet. Unterhalb des Stellelements 12 ist dabei ein weiterer Anschlag vorgesehen, der in der Figur 2 gezeigten Perspektive von dem Stellelement 12 abgedeckt ist. Auch dieser weitere Anschlag ist vorzugsweise verstellbar, so dass das Stellelement 12 zwischen einem Startpunkt, der vorgegeben ist durch den einen Anschlag 14, und einem Endpunkt, der vorgegeben wird durch einen weiteren Anschlag 14, in einem Hinlauf und einem Rücklauf bewegt werden kann.

An seinem freien Ende sieht das Stellelement 12 eine Adapterplatte 18 vor, an der zu verfahrende Bauteile befestigt werden können. Das Stellelement 12 wird über eine Kreuzrollenführung 20 im Gehäuse 16 verfahrbar gelagert.

Zum Verfahren des Stellelements 12 ist im Gehäuse ein Motor 22 vorgesehen, der als Linearmotor ausgebildet ist. Wie insbesondere aus Figur 2 deutlich wird, umfasst der Motor einen im Gehäuse 16 untergebrachten Stator 24, der entsprechende Magnetwicklungen umfasst. Mit dem Stator 24 zusammenwirkend sind an der Unterseite des Stellelements 12 das Sekundärteil des Motors bildende Permanentmagnete 26 vorgesehen. Durch entsprechende Bestromung des Stators 24 erfolgt eine Bewegung des Stellelements 12, aus der der Hinlauf und der Rücklauf zwischen dem Startpunkt und dem Endpunkt resultiert.

Im Gehäuse 16 ist ferner eine Steuerung 28 integriert, die verschiedene Eingangssignale verarbeitet und den Motor 22 entsprechend ansteuert. Zur Stromversorgung ist ein elektrischer Anschluss 30 vorgesehen.

Der Antrieb 10 umfasst zudem Wegmessmittel zum Bestimmen der Lage des Stellelements 12. Die Wegmessmittel werden dabei gebildet von den am Stellelement 12 vorgesehenen Permanentmagneten 26 sowie eines am Gehäuse 16 vorgesehenen Magnetfeldsensors, der die in seinem Detektionsbereich wechselnden Magnetfelder detektiert und entsprechende Signale an die Steuerung 28 abgibt.

Wie aus Figur 1 deutlich wird, umfasst der Antrieb 10 ein Bedienfeld 32, an dem verschiedene Statusmeldungen ausgegeben werden, nämlich:"Ready", "Power", Error", "Status". Ferner sind zwei Einstellmittel 34 und 36 vorgesehen, die als Drehregler ausgebildet sind. Mit den Einstellmitteln 34 bzw. 36 kann die Störempfindlichkeit/Geschwindigkeit des Stellelements 12 im Hinlauf bzw. Rücklauf eingestellt werden.

Der Antrieb 10, bzw. dessen Steuerung 28, ist dabei derart ausgebildet, dass der Antrieb im Betrieb wie folgt arbeitet:
Insgesamt wird der Antrieb in drei unterschiedlichen Phasen betreibbar, zum einen in der Anfahrphase, zum anderen in der Einlernphase und des Weiteren in der Betriebsphase.

Bei Inbetriebnahme des Antriebs befindet sich der Antrieb zunächst in der Anfahrphase. Dazu wird insbesondere beim ersten Hinlauf zwischen Startpunkt SP und Endpunkt EP und auch beim ersten Rücklauf zwischen Endpunkt EP und Startpunkt SP das Stellelement auf eine geringe Geschwindigkeit v_{safe} beschleunigt. Beim ersten Hinlauf und Rücklauf ist der Steuerung 28 nicht bekannt, in welche Position sich der über die verstellbaren Anschläge 14 verlagerbare Startpunkt SP und Endpunkt EP befindet. Die geringe Geschwindigkeit v_{safe} ist dabei so gewählt, dass das Stellelement 12 gegen die Anschläge 14 bewegt wird und gegen diese anschlägt, ohne dass es zu einer Beschädigung am Stellelement 12 bzw. an den Anschlägen 14 kommt. Die Position des Startpunkts SP und Endpunkts EP kann dann nach dem ersten Hinlauf und Rücklauf über die Wegmessmittel detektiert und in der Steuerung 28 hinterlegt werden.

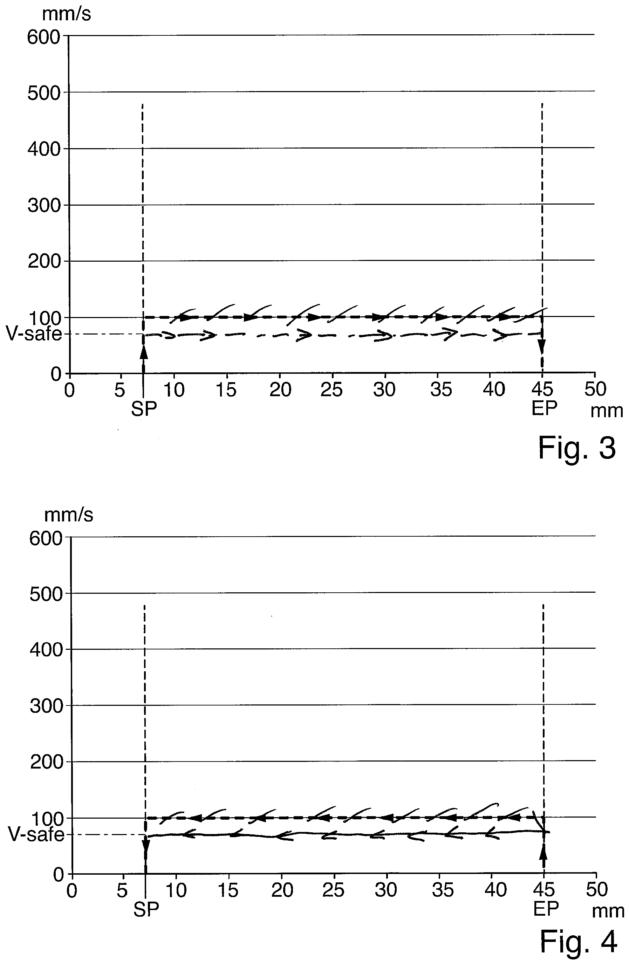

In Figur 3 ist nun der Hinlauf des Stellelements in Millimetern über der Geschwindigkeit in Millimeter/Sekunde aufgetragen. Deutlich zu erkennen ist, dass das Stellelement 12 im Startpunkt SP bei der Position 7 Millimeter startet und auf eine Geschwindigkeit v_{safe} von ca. 80 Millimeter pro Sekunde beschleunigt wird, bis es bei Millimeter 45 im Endpunkt EP gegen den Anschlag 14 prallt und auf eine Geschwindigkeit von 0 Millimeter pro Sekunde abgebremst wird.

In Figur 4 ist der erste Rücklauf dargestellt, und zwar vom Endpunkt EP 45 Millimeter hin zum Startpunkt SP 7 Millimeter.

Aus den Figuren 3 und 4 wird folglich deutlich, dass über den gesamten ersten Hinlauf und den gesamten ersten Rücklauf das Stellelement 12 im Wesentlichen mit einer konstanten Geschwindigkeit v_{safe} bewegt wird.

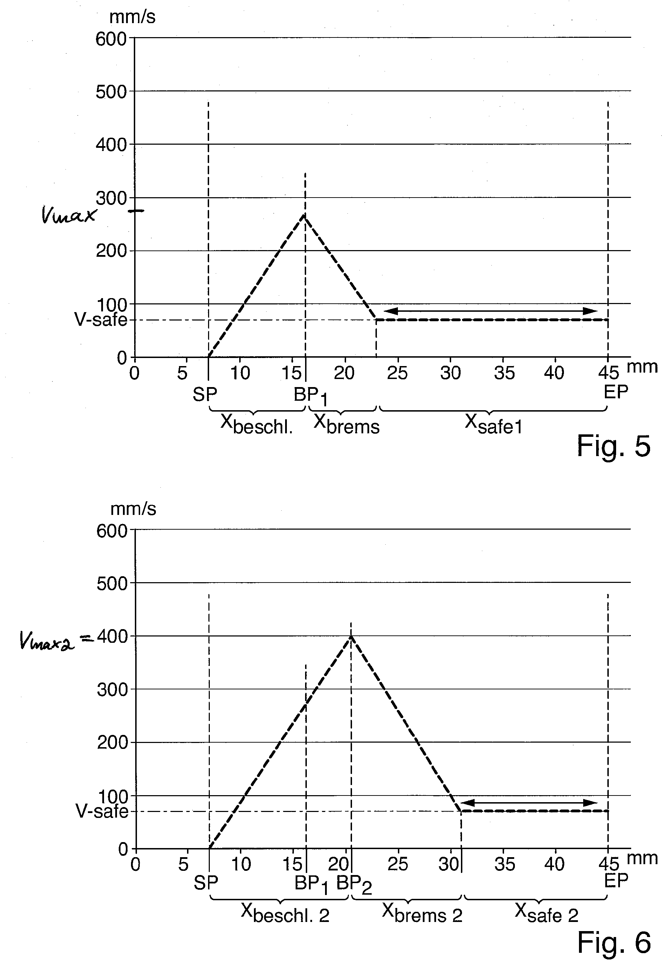

An die Anfahrphase schließt sich dann eine Einlernphase an, die in den Figuren 5 und 6 näher beschrieben ist.

In der Einlernphase wird das Stellelement im Hinlauf und im Rücklauf über eine erste Wegstrecke x_{beschl} auf eine Geschwindigkeit vₘₐₓ₁ von ca. 270 mm/s beschleunigt, und zwar bis zu einem ersten Bremspunkt BP1, der gemäß Figur 5 bei ca. 16 mm liegt. An die Wegstrecke x_{beschl} schließt sich dann eine zweite Wegstrecke x_{brems} an, innerhalb derer das Stellelement von der Geschwindigkeit, die es im Bremspunkt BP1 hat, auf die geringe Geschwindigkeit v_{safe} abgebremst wird. An die Wegstrecke x_{brems} schließt sich dann die Wegstrecke x_{safe1} an, in der das Stellelement 12 mit der geringen Geschwindigkeit bis zum Endpunkt EP verfahren wird, an dem es gegen den Anschlag 14 trifft. Innerhalb der Wegstrecke x_{beschl} wird das Stellelement vorzugsweise maximal beschleunigt und innerhalb der Wegstrecke x_{brems} maximal abgebremst.

Um eine Schwingungsdämpfung beim Aufschlagen des Stellelements gegen die Anschläge zu verringern ist vorteilhaft, wenn die Steuerung 28 den Motor 22 so ansteuert, dass das Stellelement 12 im Startpunkt und Endpunkt mit einer erhöhten und insbesondere mit maximaler Kraft gegen den Anschlag beaufschlagt wird.

In nachfolgenden Hin- und Rückläufen wird der Bremspunkt BP, wie in Figur 6 gezeigt, hin zum Endpunkt EP bzw. bei Rückläufen zum Startpunkt SP verlagert. Damit einher geht eine höhere maximale Geschwindigkeit vₘₐₓ₂ von ca. 400 mm/s und eine Verkürzung der Wegstrecke x_{safe}. Aus Figur 6 wird folglich deutlich, dass in einem weiteren Hinlauf das Stellelement 12 bis zum Bremspunkt BP2 über die Wegstrecke x_{beschl2} beschleunigt wird, und daran anschließend über die Wegstrecke x_{brems2} abgebremst wird. Ab X = 31 mm wird dann bis zum Endpunkt, also entlang der Wegstrecke x_{safe2} das Stellelement 12 mit der Geschwindigkeit v_{safe} bewegt. Aufgrund der längeren Beschleunigung bis zum Bremspunkt BP2 wird die vₘₐₓ₂ von 400 mm/Sek. erreicht, wodurch sich insgesamt ein zeitlich kürzerer Hinlauf als beim vorherigen Hinlauf gemäß Figur 5 ergibt. Das Stellelement wird insgesamt folglich innerhalb einer kürzeren Zeitdauer zwischen dem Startpunkt SP und dem Endpunkt EP bewegt.

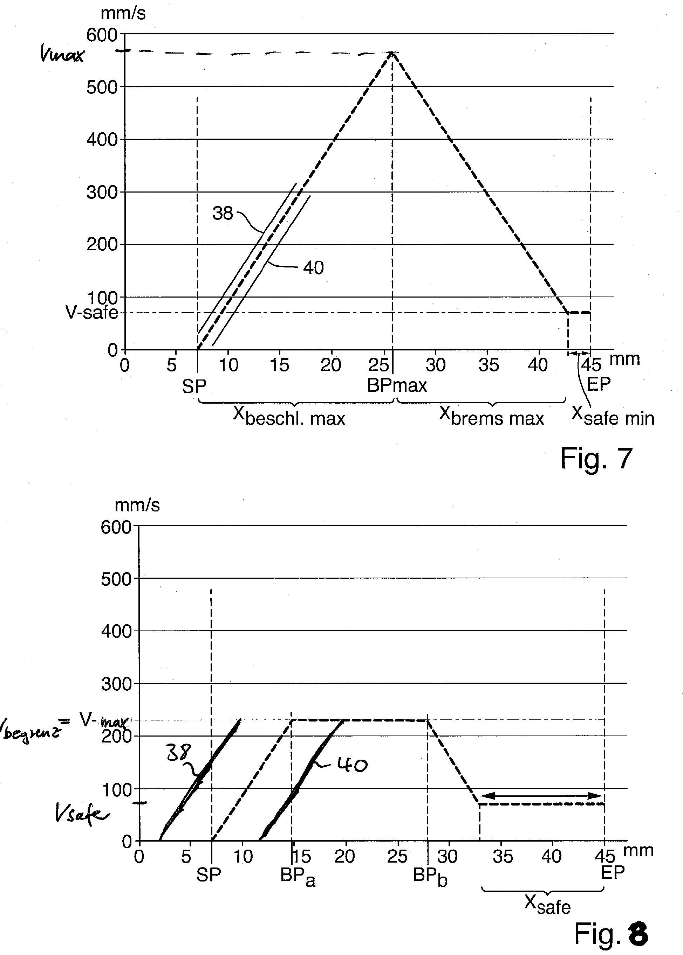

In einem weiteren Hinlauf wird dann der Bremspunkt weiter Richtung Endpunkt EP verlagert bzw. die Wegstrecke x_{safe} weiter verkürzt und die Geschwindigkeit vₘₐₓ weiter erhöht, so lange, bis die Wegstrecke x_{safe} eine vorgebbare, minimale Länge x_{safe-min}, wie in Figur 7 gezeigt, erreicht hat.

In diesem Zustand, der wie in Figur 7 gezeigt ist, ist dann die Betriebsphase erreicht; das Stellelement 12 bewegt sich mit maximaler Geschwindigkeit vₘₐₓ von ca. 570 mm/s in maximal kurzer Zeit zwischen dem Startpunkt SP und dem Endpunkt EP. Das Stellelement 12 wird dabei über eine maximale Wegstrecke x_{beschl-max} beschleunigt, bis zum Bremspunkt BPₘₐₓ. Daran schließt sich die Wegstrecke x_{brems-max} an, innerhalb derer das Stellelement auf die Geschwindigkeit v_{safe} abgegrenzt wird. Die Wegstrecke x_{safe-min} ist dabei so gewählt, dass sichergestellt wird, dass das Stellelement 12 mit der noch zulässigen Geschwindigkeit v_{safe} gegen den Anschlag 14 auftrifft.

Während des Betriebs werden insbesondere über einen am Stellelement 12 vorgesehenen Beschleunigungssensor Störeinflüsse gemessen, die aus auf das Stellelement 12 wirkenden Kräften resultieren. Die Störeinflüsse können durch unterschiedliche Einbaulagen, bewegte Massen, äußere Kräfte oder auftretende Reibung auftreten. Ändern sich die Störeinflüsse nur innerhalb einer vorgegebenen Störempfindlichkeit, so werden diese automatisch vom Antrieb korrigiert. In Figur 7 ist eine zulässige Störempfindlichkeit, innerhalb derer eine Beschleunigung des Antriebs zulässig ist, durch die beiden parallelen Linien 38, 40 angedeutet. Beschleunigungsschwankungen innerhalb diesen beiden Linien 38, 40, also innerhalb der Störempfindlichkeit, werden vom Antrieb ausgeregelt, so dass gewährleistet wird, dass die Wegstrecke x_{safe-min} eingehalten wird, was wiederum zur Folge hat, dass das Stellelement 12 mit der noch zulässigen Geschwindigkeit v_{safe} gegen den Anschlag 14 auftrifft.

Wie eingangs erwähnt, kann über die beiden Einstellmittel 34 und 36 die Störempfindlichkeit des Stellelements 12 im Hinlauf bzw. Rücklauf eingestellt werden. Die Änderung der Störempfindlichkeit hat zudem die Folge, dass bei Erhöhung der Störempfindlichkeit die Geschwindigkeit vₘₐₓ erhöht und die Wegstrecke x_{safe} verringert und bei Verringerung der Störempfindlichkeit die Geschwindigkeit vₘₐₓ verringert und die Wegstrecke x_{safe} verlängert wird.

In Figur 8 ist ein Betriebszustand gezeigt, bei dem die Störempfindlichkeit im Hinlauf durch das Einstellmittel 34 verringert ist. Die beiden Störeinflusslinien 38, 40 sind hier weiter voneinander entfernt dargestellt, wodurch größere Beschleunigungs- bzw. Geschwindigkeitsschwankungen innerhalb der Wegstrecke x_{beschl} zulässig werden. Einher geht damit eine begrenzte zulässige Geschwindigkeit vₘₐₓ = v_{begrenzt}, sowie eine vergrößerte Wegstrecke x_{safe.}

Im Bremspunkt BPa wird folglich die Beschleunigung beendet und es wird das Stellelement 12 mit weitgehend konstanter Geschwindigkeit v_{begrenzt} bis zum Bremspunkt BPb bewegt. Dort erfolgt dann ein Abbremsen auf die noch zulässige Geschwindigkeit v_{safe}.

Dadurch, dass größere Beschleunigungs- bzw. Geschwindigkeitsschwankungen zugelassen werden, ist es erforderlich, auch die Wegstrecke x_{safe} entsprechend zu vergrößern, um stets zu gewährleisten, dass das Stellelement 12 mit der noch zulässigen Geschwindigkeit v_{safe} gegen den Anschlag 14 im Endpunkt auftrifft.

Der in den Figuren gezeigte Antrieb 10 hat folglich den Vorteil, dass der Bediener nach Inbetriebnahme des Antriebs keine weiteren Maßnahmen ergreifen muss. Der Antrieb 10 geht selbsttätig in die Anfahrphase, danach folgend in die Einlernphase und danach in die Betriebsphase. Über die Überwachung der Beschleunigung des Stellelements 12 ist stets gewährleistet, dass das Stellelement 12 mit maximal kurzer Zeitdauer zwischen dem Startpunkt und dem Endpunkt bewegt wird. Für sehr schnelle Bewegungen kann die Störempfindlichkeit erhöht werden; bei geringeren Beschleunigungsabweichungen schaltet die Steuerung dann bei Überschreiten der Störempfindlichkeit in einen Störmodus.

Beispielsweise ist denkbar, dass im Störmodus das Stellelement 12 in die noch zulässige Geschwindigkeit v_{safe} abgebremst wird oder das Stellelement angehalten wird.

Soll die Robustheit des Antriebs 10 erhöht werden, bzw. die Störempfindlichkeit gesenkt werden, so kann dies über die entsprechenden Drehregler 34, 36 erfolgen. Insgesamt wird das Stellelement dann nicht mit derart hohen Geschwindigkeiten vₘₐₓ bewegt. Allerdings ist gewährleistet, dass bei größeren Beschleunigungsabweichungen dennoch das Stellelement zuverlässig vom Startpunkt zum Endpunkt verfahren wird.

## Patentansprüche

1. Verfahren zur Steuerung eines elektrischen Antriebs (1)mit einem in einem Hinlauf zwischen einem Startpunkt (SP) und einem Endpunkt (EP) und in einem Rücklauf zwischen dem Endpunkt (EP) und dem Startpunkt (SP) verfahrbaren Stellelement (12),
wobei das Stellelement (12) im Hinlauf und/oder Rücklauf über eine erste Wegstrecke (x_{beschl}) auf eine erste Geschwindigkeit (vₘₐₓ) beschleunigt wird, über eine zweite Wegstrecke (x_{brems}) abgebremst wird und danach über eine dritte Wegstrecke (x_{safe1}) mit einer zweiten Geschwindigkeit (v_{safe}) gegen einen Anschlag (14) bewegt wird,
**dadurch gekennzeichnet,**
**dass** in einer Einlernphase über mehrere Hin- und Rückläufe, die dritte Wegstrecke (xₛₐᵣₑ₁) bei jedem Lauf jeweils kürzer wird, bis letztlich die dritte Wegstrecke (x_{safe1}) einer minimalen Wegstrecke (x_{safe-min}) entspricht,
wobei die Länge der minimalen Wegstrecke (x_{safe-min}) vorgegeben ist.

2. Verfahren nach Anspruch 1, **dadurch gekennzeichnet, dass** in einer Anfahrphase beim ersten Hinlauf und/oder ersten Rücklauf, das Stellelement (12) nur auf die zweite Geschwindigkeit (v_{safe}) beschleunigt wird.

3. Verfahren nach Anspruch 1 oder 2 **dadurch gekennzeichnet, dass** die erste Geschwindigkeit (vₘₐₓ) vorgegeben ist.

4. Verfahren nach einem der vorhergehenden Ansprüche, **dadurch gekennzeichnet, dass** die auf das Stellelement (12) wirkenden äußeren Störeinflüsse, die aus auf das Stellelement (12) wirkenden Kräften resultieren detektiert werden, wobei das Stellelement (12) derart angetrieben wird, dass die Störeinflüsse berücksichtigt werden und/oder der Antrieb (10) in einem Störmodus schaltet, wenn die Störeinflüsse eine vorgegebene Störempfindlichkeit überschreiten.

5. Verfahren nach Anspruch 4, **dadurch gekennzeichnet, dass** das Detektieren der Störeinflüsse mittels einer Beschleunigungsüberwachung erfolgt.

6. Verfahren nach Anspruch 4 oder 5, **dadurch gekennzeichnet, dass** die Störempfindlichkeit eingestellt wird.

7. Verfahren nach Anspruch 4, 5 oder 6, **dadurch gekennzeichnet, dass** bei Erhöhung der maximalen Geschwindigkeit (vₘₐₓ) die Störempfindlichkeit verringert,
oder dass bei Verkürzung der dritten Wegstrecke (x_{safe1}) und/oder Verringerung der ersten Geschwindigkeit (vₘₐₓ) die Störempfindlichkeit erhöht wird.

8. Verfahren nach einem der vorhergehenden Ansprüche, **dadurch gekennzeichnet, dass** das Stellelement (12) im Startpunkt (SP) und/oder Endpunkt (EP) mit einer erhöhten oder maximalen Kraft gegen den Anschlag (14) beaufschlagt wird.

9. Elektrischer Antrieb (10)
mit einem in einem Hinlauf zwischen einem Startpunkt (SP) und einem Endpunkt (EP) und in einem Rücklauf zwischen dem Endpunkt (EP) und dem Startpunkt (SP) verfahrbaren Stellelement (12),
mit verstellbaren Anschlagmitteln (14), gegen welche das Stellelement (12) im Startpunkt (SP) und/oder Endpunkt (EP) anschlägt,
mit einem elektrischen Motor (22) zum Verfahren des Stellelements (12),
mit Wegmessmitteln zur Bestimmung der Lage des Stellelements (12),
mit einer Steuerung (28) zur Ansteuerung des Motors (22) in Abhängigkeit der Signale der Wegmessmittel,
**dadurch gekennzeichnet,**
**dass** die Steuerung (28) derart ausgebildet und eingerichtet ist, dass der Antrieb (10) im Betrieb gemäß einem Verfahren nach einem der Ansprüche 1 bis 8 betrieben wird.

10. Antrieb (10) nach Anspruch 9, **dadurch gekennzeichnet, dass** Längeneinstellmittel zur Einstellung der Länge der dritten Wegstrecke (x_{safe1}) und/oder Geschwindigkeitseinstellmittel zur Einstellung der ersten Geschwindigkeit (vₘₐₓ) vorgesehen sind.

11. Antrieb (10) nach Anspruch 9 oder 10, **dadurch gekennzeichnet, dass** Einflusseinstellmittel zur Einstellung der Störempfindlichkeit und Einflussmessmitteln zur Bestimmung der auf das Stellelement (12) wirkenden äußeren Störeinflüsse vorgesehen sind.

12. Antrieb (10) nach einem der Ansprüche 9 bis 11, **dadurch gekennzeichnet, dass** der Motor (22) ein Linearmotor oder ein Schwenkantrieb ist.

## Claims

1. Method for controlling an electric drive (1) comprising an actuator (12) which can be moved in a forward movement between a starting point (SP) and an end point (EP) and in a return movement between the end point (EP) and the starting point (SP),
the actuator (12), in the forward movement and/or return movement, being accelerated to a first speed (vₘₐₓ) over a first distance (x_{beschl}), braked over a second distance (x_{brems}), and thereafter being moved over a third distance (x_{safe1}) at a second speed (v_{safe}) as far as a stop (14),
**characterized in that,**
in a learning phase, over a plurality of forward and return movements, the third distance (x_{safe1}) becomes shorter with each run until the third distance (x_{safe1}) ultimately corresponds to a minimum distance (x_{safe-min}),
the length of the minimum distance (x_{safe-min}) being predetermined.

2. Method according to claim 1, **characterized in that,** in a start-up phase, the actuator (12) is only accelerated to the second speed (v_{safe}) during the first forward movement and/or first return movement.

3. Method according to claim 1 or claim 2, **characterized in that** the first speed (vₘₐₓ) is predetermined.

4. Method according to any of the preceding claims, **characterized in that** external interfering influences acting on the actuator (12), which result from forces acting on the actuator (12), are detected, the actuator (12) being driven such that the interfering influences are taken into account and/or the drive (10) switches to an interference mode when the interfering influences exceed a predetermined interference susceptibility.

5. Method according to claim 4, **characterized in that** the interfering influences are detected by means of acceleration monitoring.

6. Method according to claim 4 or claim 5, **characterized in that** the interference susceptibility is adjusted.

7. Method according to claim 4, claim 5 or claim 6, **characterized in that** the interference susceptibility is reduced when the maximum speed (vₘₐₓ) is increased,
or **in that** the interference susceptibility is increased when the third distance (X_{safe1}) is shortened and/or the first speed (vₘₐₓ) is reduced.

8. Method according to any of the preceding claims, **characterized in that** the actuator (12) strikes the stop (14) with an increased or maximum force at the starting point (SP) and/or end point (EP).

9. Electric drive (10), comprising
an actuator (12) which can be moved in a forward movement between a starting point (SP) and an end point (EP) and in a return movement between the end point (EP) and the starting point (SP),
adjustable stop means (14) which the actuator (12) strikes at the starting point (SP) and/or end point (EP),
an electric motor (22) for moving the actuator (12),
position measuring means for determining the position of the actuator (12),
a controller (28) for controlling the motor (22) depending on the signals from the position measuring means, **characterized in that**
the controller (28) is designed and equipped such that the drive (10) is operated according to a method according to any of claims 1 to 8 during operation.

10. Drive (10) according to claim 9, **characterized in that** length adjusting means are provided for adjusting the length of the third distance (x_{safe1}) and/or speed adjusting means are provided for adjusting the first speed (vmax).

11. Drive (10) according to claim 9 or claim 10, **characterized in that**influence adjusting means are provided for adjusting the interference susceptibility, and influence measuring means are provided for determining the external interfering influences acting on the control element (12).

12. Drive (10) according to any of claims 9 to 11, **characterized in that** the motor (22) is a linear motor or a slewing drive.

## Revendications

1. Procédé pour la commande d'un entraînement électrique (1) avec un élément de réglage (12) déplaçable dans une course aller entre un point initial (SP) et un point final (EP) et dans une course retour entre le point final (EP) et le point initial (SP),
dans lequel l'élément de réglage (12) lors de la course aller et/ou course retour est accéléré sur un premier trajet (X_{beschl}) à une première vitesse (v_{maX}), est freiné sur un deuxième trajet (X_{brems}) et ensuite est déplacé contre une butée (14) sur un troisième trajet (x_{safel}) à une deuxième vitesse (v_{safe}),
**caractérisé en ce**
**que** dans une phase d'apprentissage sur plusieurs courses aller et retour, le troisième trajet (X_{safel}) lors de chaque course est respectivement plus court jusqu'à ce qu'en fin de compte le troisième trajet (X_{safel}) corresponde à un trajet minimal (x_{safe-min}),
dans lequel la longueur du trajet minimal (X_{safe-min}) est prédéfinie.

2. Procédé selon la revendication 1, **caractérisé en ce que** dans une phase de démarrage lors de la première course aller et/ou première course retour, l'élément de réglage (12) est accéléré uniquement jusqu'à la deuxième vitesse (v_{safe}).

3. Procédé selon la revendication 1 ou 2 **caractérisé en ce que** la première vitesse (vₘₐₓ) est prédéfinie.

4. Procédé selon l'une quelconque des revendications précédentes, **caractérisé en ce que** les influences perturbatrices extérieures agissant sur l'élément de réglage (12), qui résultent des forces agissant sur l'élément de réglage (12), sont détectées, dans lequel l'élément de réglage (12) est entraîné de telle sorte que les influences perturbatrices sont prises en compte et/ou l'entraînement (10) bascule dans un mode perturbations, lorsque les influences perturbatrices dépassent une sensibilité aux perturbations prédéfinie.

5. Procédé selon la revendication 4, **caractérisé en ce que** la détection des influences perturbatrices s'effectue au moyen d'une surveillance de l'accélération.

6. Procédé selon la revendication 4 ou 5, **caractérisé en ce que** la sensibilité aux perturbations est réglée.

7. Procédé selon la revendication 4, 5 ou 6, **caractérisé en ce que** lors de l'augmentation de la vitesse maximale (vₘₐₓ) la sensibilité aux perturbations est réduite,
ou que lors d'un raccourcissement du troisième trajet (x_{safel}) et/ou d'une diminution de la première vitesse (vₘₐₓ) la sensibilité aux perturbations est augmentée.

8. Procédé selon l'une quelconque des revendications précédentes, **caractérisé en ce que** l'élément de réglage (12) au point initial (SP) et/ou point final (EP) est sollicité avec une force accrue ou maximale contre la butée (14).

9. Entraînement électrique (10)
avec un élément de réglage (12) déplaçable dans une course aller entre un point initial (SP) et un point final (EP) et dans une course retour entre le point final (EP) et le point initial (SP),
avec des moyens de butée (14) réglables, contre lesquels l'élément de réglage (12) est en butée au point initial (SP) et/ou point final (EP),
avec un moteur électrique (22) pour le déplacement de l'élément de réglage (12),
avec des moyens de mesure de déplacement pour la détermination de la position de l'élément de réglage (12),
avec une commande (28) pour la commande du moteur (22) en fonction des signaux des moyens de mesure de déplacement, **caractérisé en ce**
**que** la commande (28) est réalisée et conçue de telle sorte que l'entraînement (10) pendant le fonctionnement fonctionne selon un procédé selon l'une quelconque des revendications 1 à 8.

10. Entraînement (10) selon la revendication 9, **caractérisé en ce que** des moyens de réglage de longueur sont prévus pour le réglage de la longueur du troisième trajet (x_{safel}) et/ou des moyens de réglage de vitesse sont prévus pour le réglage de la première vitesse (vₘₐₓ).

11. Entraînement (10) selon la revendication 9 ou 10, **caractérisé en ce que** des moyens de réglage d'influence pour le réglage de la sensibilité aux perturbations et des moyens de mesure d'influence pour la détermination des influences perturbatrices extérieures agissant sur l'élément de réglage (12) sont prévus.

12. Entraînement (10) selon l'une quelconque des revendications 9 à 11, **caractérisé en ce que** le moteur (22) est un moteur linéaire ou un entraînement en pivotement.
